# EUROPÄISCHE PATENTSCHRIFT

(11) **EP 1 178 060 B1**
(45) Veröffentlichungstag und Bekanntmachung des Hinweises auf die Patenterteilung: **15.02.2006**
(21) Anmeldenummer: 00116566.1
(22) Anmeldetag: 01.08.2000
(51) Int. Cl.: C08G 18/36, C08G 18/42, C08G 18/79

(54) **Polyhydroxylverbindungen aus Ricinusöl mit erhöhter Reaktivität geeignet zur Polyurethan-Synthese**
Polyhydroxy compounds from castor oil having enhanced reactivity for polyurethane synthesis
Composés polyhydroxylés dérivés d'huile de ricin à reactivité élevée pour la synthèse de polyuréthanes

(43) Veröffentlichungstag der Anmeldung: 06.02.2002
(73) Patentinhaber: Sika Schweiz AG, 8064 Zürich (CH)
(72) Erfinder: Gerber, Ulrich, 8142 Uitikon-Waldegg (CH); Meyer, Werner, 8702 Zollikon (CH); Schelbert, Paul, 8913 Ottenbach (CH)
(74) Vertreter: Isler, Jörg

(56) Entgegenhaltungen:
- US-A- 4 789 705
- US-A- 5 468 802

## Beschreibung

Die vorliegende Erfindung betrifft neuartige fettchemisch modifizierte Polyhydroxylverbindungen aus Ricinusöl, deren Herstellung und Verwendung zur Formulierung von reaktiven Polyurethan-Massen, insbesondere von Beschichtungen, Bodenbelägen und Klebstoffen.

Polyurethane, aus Polyadditionen von Polyisocyanaten und Polyhydroxylverbindungen, finden als reaktive ein- oder zweikomponentige Systeme einen breiten Einsatz als Klebstoffe, Abdichtungsmaterialien, Dekorations-und Schutzbeschichtungen und Bodenbeläge. Von grosser Bedeutung sind bei allen Applikationen die Beständigkeiten gegenüber Alterung und Angriff durch chemische Stoffe wie zum Beispiel Wasser. Aus diesem Grunde sind eine möglichst hohe Hydrophobie der Bindemittel erwünscht, um das Einwirken von polaren Chemikalien auf die Beschichtung oder den Klebstoff stark zu reduzieren. Zusätzlich zu den chemischen Beständigkeiten spielen, insbesondere für Beschichtungen, ästhetische Aspekte eine grosse Bedeutung. So sind defektfreie Oberflächen wichtig, und es wird oft für Anwendung im Aussenbereich bei Bodenbelägen eine Beständigkeit gegenüber Vergilbung bei Exposition durch UV-Strahlung gefordert.

Neben diesen Anforderungen an die Eigenschaften der ausgehärteten Produkte sind eine hohe Reaktivität bzw. schnelle Aushärtungszeiten bei Raumtemperatur wichtig, da dadurch die Verarbeitungszeiten verkürzt und die Kosten des gebundenen Kapitals gesenkt werden können. Zudem ist bei Anwendungen im Baubereich eine genügende Reaktivität der Systeme eine Voraussetzung für Applikationen bei Temperaturen um 10°C. Dies ist von grosser Bedeutung, da in vielen geographischen Regionen die durchschnittlichen Anwendungstemperaturen während des Grossteils des Jahres in diesem Bereich liegen.

Es ist seit langem bekannt, dass sich Ricinusöl aufgrund seiner hohen Hydrophobie sehr gut als Polyol für zweikomponentige Polyurethansysteme eignet. Dabei wird Ricinusöl oft in Abmischungen mit anderen Polyolen eingesetzt. Ricinusöl und andere pflanzlichen Öle können durch Epoxidierung und anschliessende Ringöffnung mit Glykolen zu ebenfalls hydrophoben Polyolen umgesetzt werden, die sich für die Anwendung in zweikomponentigen Polyurethansystemen eignen. So beschreiben die Patentschriften WO 96/06123, US 5,512,655 und DE 4308097 solche Polyole. EP 0 798 325 beschreibt ein weiteres Polyol, das durch die Umsetzung von Ricinusöl mit aromatischen Polyestern erhalten wird.

Ricinusöl und Ricinolsäure selbst, wie auch die oben beschriebenen Umsetzungsprodukte weisen jedoch alle, aufgrund der sterischen Hinderung der darin enthaltenen Hydroxylgruppen, eine relativ geringe Reaktivität gegenüber Isocyanaten auf. Die oben erwähnten Polyole sind daher ungeeignet zur Umsetzung bei Raumtemperatur mit aliphatischen Isocyanaten, um UV-stabile, nichtvergilbende Systeme zu erhalten. Die Umsetzung mit den bedeutend reaktiveren aromatischen Isocyanaten, wie MDI und dessen Derivaten, ist zwar möglich, die Umsetzungsprodukte der oben beschriebenen Polyole mit aromatischen Isocyanaten neigen jedoch stark zur Vergilbung bei Lichtexposition. Zudem können aufgrund der geringen Reaktionsbereitschaft der sekundären Hydroxylgruppen nur beschränkt sehr schnelle Systeme für Sprühapplikationen realisiert werden. Zudem reagieren die sekundären Hydroxylgruppen oft nur unvollständig mit den Isocyanatgruppen. Die verbleibenden nicht umgesetzten Hydroxylgruppen erhöhen dann oft stark die Hydrophilie der Systeme und setzen deren Beständigkeit stark herab.

Polyesterpolyole mit erhöhter Reaktivität sind in den Patenten US 4656243, US 4692384, US 4894430, US 5260138 und US 5319056 beschrieben. Diese weisen zwar eine genügende Reaktivität auf, um eine Umsetzung mit nicht-aromatischen Isocyanaten bei Raumtemperatur zu ermöglichen, haben aber im Vergleich zu den oben beschriebenen Polyolen eine viel geringere Hydrophobie.

Ziel der vorliegenden Erfindung war es deshalb fettchemisch basierende Polyole mit hoher Hydrophobie und gleichzeitig hoher Reaktivität bereitzustellen.

Die vorliegende Erfindung betrifft Polyole mit hoher Reaktivität und hoher Hydrophobie, welche durch Umsetzung von gesättigten oder ungesättigten Fettsäuren oder Fettsäure-Estern, die mindestens eine sekundäre, insbesondere auch eine sterisch gehinderte sekundäre Hydroxylgruppe enthalten, mit Anhydriden von Dicarbonsäuren, insbesondere cyclischen 1,2-Dicarbonsäuren, speziell bevorzugt Hexahydrophthalsäure, und der anschliessenden Veresterung mit Polyhydroxyverbindungen, insbesondere Glycolen, erhältlich sind. Bevorzugte Fettsäuren resp. Fettsaäureester sind Ricinolsäure oder Ricinusöl.

Solche Polyole, die vorzugsweise mittels dieses Verfahrens gebildet werden, können grob beschrieben werden als Verbindungen der Formel (I) 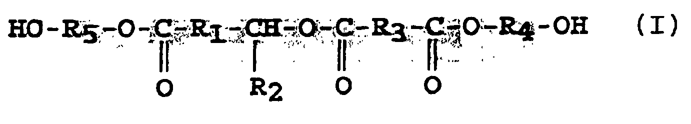
in der
R₁ für einen Alkylen- oder Alkenylenrest steht, insbesonders einen Rest mit 5 bis 20 C-Atomen, speziell bevorzugt den Rest -(CH₂)₇-CH=CH-CH₂-,
R₂ Wasserstoff oder insbesondere einen Alkyl-oder Alkenylrest mit vorzugsweise 2 bis 20 C-Atomen bedeutet, speziell bevorzugt den Rest -(CH₂)₅-CH₃,
R₃ einen aliphatischen, insbesondere einen cyclischen aliphatischen, oder aromatischen Rest bedeutet,
R₄ einen geradkettigen oder verzweigtkettigen Alkylenrest bedeutet, insbesondere Neopentylen, und
R₅ = R₄ ist oder einen gegebenenfalls mit Hydroxylgruppen substituierten sich von R₄ unterscheidenden, geradkettigen oder verzweigtkettigen Alkylenrest, bedeutet, insbesondere einen Neopentylenrest oder einen Hydroxymethyl substituierten Ethylenrest.

Aufgrund der zur Herstellung verwendeten Reaktion wird üblicherweise, insbesondere ausgehend von Fettsäureestern eine Mischung von Verbindungen der Formel (I) erhalten, beispielsweise Mischungen, die solche Verbindungen der Formel (I) enthalten, in denen R₄ aus dem Polyol und R₅ entweder aus dem Polyol oder aus dem Alkohol des als Ausgangssubstanz eingesetzten Fettsäureesters stammen.

Diese erfindungsgemässen Polyole vereinigen aufgrund des hohen fettchemischen Anteiles und der primären Hydroxylgruppen eine hohe Reaktivität mit einer hohen Hydrophobie. Diese Polyole eignen sich deshalb besonders zur Verwendung in Kombination mit aliphatischen Isocyanaten zur Realisierung von lichtechten Polyurethanmassen, und in Kombination mit aromatischen Isocyanaten zur Realisierung von Polyurethanmassen hoher Reaktivität mit jeweils hoher Witterungsbeständigkeit. Die erfindungsgemässen Polyurethane zeichnen sich, u.a. aufgrund der hohen Reaktionsbereitschaft der Polyole, durch ausgezeichnete mechanische Eigenschaften aus. Im weiteren zeichnen sich die erhaltenen Bindemittel durch ausgezeichnete Verträglichkeiten mit sich selbst und mit den üblicherweise in Polyurethanmassen verwendeten Füllstoffsystemen aus, was die Realisierung von ästhetisch anspruchsvollen Systemen ermöglicht.

Zudem ist die Herstellung der erfindungsgemässen Bindemittel besonders einfach und kostengünstig, da die Umsetzung der fettchemischen Hydroxylgruppen mit dem Anhydrid, trotz der geringen Reaktivität der fettchemischen Hydroxylgruppen, vollständig und bei relativ tiefen Temperaturen abläuft. Die so erhaltenen Halbester können selektiv mit Polyhydroxylverbindungen, wie Glycolen, unter Ausbildung primärer Hydroxylgruppen umgesetzt werden.

Die Herstellung erfolgt beispielsweise dadurch, dass mindestens eine Fettsäure, die mindestens eine sekundäre Hydroxylgruppe, enthält, oder mindestens ein Ester einer solchen Fettsäure oder Mischungen derselben mit einem geringen Überschuss mindestens eines Anhydrids einer Dicarbonsäure, insbesondere einer cyclischen 1,2-Dicarbonsäure, bei 150°C bis 200°C während ca. 40 Minuten umgesetzt wird. Bevorzugte fettchemische Komponenten sind dabei Ricinolsäure und Ricinusöl. Bevorzugte Mischverhältnisse vom Dicarbonsäureanhydrid zu den Hydroxylgruppen der fettchemischen Komponenten sind 0,7 : 1 bis 1,5 : 1, besonders bevorzugt sind Mischverhältnisse von 1,05 : 1 bis 1,1 : 1. Die Reaktion wird sinnvollerweise in Gegenwart von Veresterungskatalysatoren durchgeführt. Geeignet sind beispielsweise übliche Veresterungskatalysatoren, wie z.B. Zinkacetat, Zinkoxid, Antimontrioxid, Ester der Titansäure, wie Isopropyl-Titanat, Tetrabutyl-0-titanat, Zirkonsäure-Ester im Konzentrationsbereich von 0,1 bis 0,5% der Reaktionsmasse. Geeignete DicarbonsäureAnhydride sind Anhydride, die zu einem stabilen Halbester führen. Zu diesen zählen insbesondere Anhydride cyclischer 1,2-Dicarbonsäuren, speziell bevorzugt cycloaliphatische oder aromatische Dicarbonsäureanhydride. Als cyclische 1,2-Dicarbonsäuren werden im Rahmen dieser Erfindung Carbonsäuren verstanden, die Säuregruppen an benachbarten Kohlenstoffen eines Rings aufweisen. Beispiele von Anhydriden, die im Rahmen dieser Erfindung einsetzbar sind umfassen Hexahydrophthalsäureanhydrid, Methylhexahydrophthalsäureanhydrid, Tetrahydrophthalsäureanhydrid, Endomethylentetrahydrophthalsäureanhydrid (Nadig-Anhydrid) und deren Derivate, die flüssigen Mischungen von Tetrahydrophthalsäuranhydrid und Hexahydrophthalsäureanhydrid und cycloaromatische Dicarbonsäureanhydride wie Phthalsäureanhydrid. Besonders bevorzugt für die Realisierung von lichtechten Systemen ist Hexahydrophthalsäureanhydrid pur oder verflüssigt mit Tetrahydrophthalsäureanhydrid.

Anschliessend wird das Reaktionsgemisch mit mindestens einer Polyhydroxylverbindung im Verhältnis der Hydroxylgruppen zu den Carbonsäuregruppen von 1,8 bis 2,2 versetzt und während ca. 2 Stunden bei 230°C - 250°C nachverestert. Als Polyhydroxylverbindungen sind besonders bevorzugt Neopentylglycol, 1,3-Propandiol, 1,4-Butandiol, 1,5-Pentandiol und 1,6-Hexandiol. Im weiteren sind Trimethylolpropan, Trimethylolethan, Trimethylolmethan, Pentaerythrit, Diethylenglycol, Tripropylenglycol, 1,2-Propandiol, Isomere von 1,4-Butandiol, Isomere von 1,5-Pentandiol, Isomere von 1,6-Hexandiol, Dipropylenglycol, Dimethylol-propionsäure, 1,4-Cyclohexandimethanol und Isomere, 1,4-Bis(2-hydroxyethoxy)cyclohexan, Dekamethylenglycol, Norbornylenglycol, 1,4-Benzendiethanol, 2,4-Dimethyl-2-ethylenhexan-1,3-diol, 2-Buten-1,4-diol, Trimethylolethan, Trimethylolpropan, ethoxyliertes Trimethylolpropan, Trimethylolpropanmonoallylether, Trimethylolhexan, 1,2,4-Butantriol, Pentaerythritol, Dipentaerythritol, Pentaerythrit, Ethylenglycol, Diethylenglycol, Dipropylenglycol, als Polyhydroylverbindung geeignet. Die vorstehenden Polyhydroylverbindungen können alleine oder in Mischungen verwendet werden.

Zuletzt wird die Reaktionsmischung abgekühlt. Sie kann anschliessend ohne weitere Aufarbeitung verwendet werden.

Die erfindungsgemässen Polyesterpolyole sind speziell geeignet für die Verwendung als Komponente oder als Bestandteil einer Komponente in zweikomponentigen Polyurethanbeschichtungen und Polyurethanklebstoffen. Solche Zweikomponentensysteme mit z.B. Hexamethylendiisocyanat(HDI)-Cyclotrimerisat als Härter eignen sich sehr gut als lichtechte Beschichtungen.

Ein weiterer Gegenstand der vorliegenden Erfindung sind denn auch Zweikomponenten-Polyurethanbeschichtung oder Zweikomponenten-Polyurethanklebstoffe, die dadurch gekennzeichnet sind, dass die Härterkomponente ein erfindungsgemässes Polyesterpolyol enthält oder daraus besteht und dass die Härterkomponente einen Härter auf Isocyanatbasis enthält oder daraus besteht, für lichtechte Beschichtungen vorzugsweise Hexamethylendiisocyanat(HDI)-Cyclotrimerisat.

Die Reaktion ausgehend von Ricinusöl, Hexahydrophthalsäureanhydrid (HHPS) und Neopentylglykol (NPG) ist im folgenden Schema dargestellt, wobei im Endprodukt neben den unter der 2. Stufe dargestellten Vollveresterungsprodukten auch noch vollveresterte Diglyceride und Triglyceride vorhanden sein können.

Im Schema ist die Doppelbindung innerhalb des Fettsäurerestes lediglich als Fettdruck markiert.

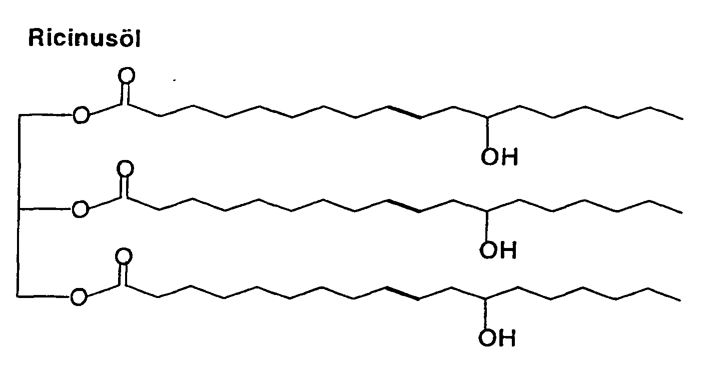

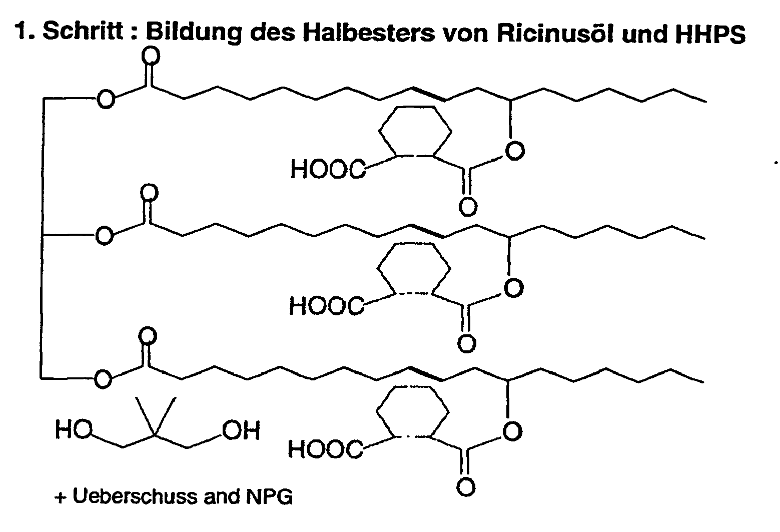

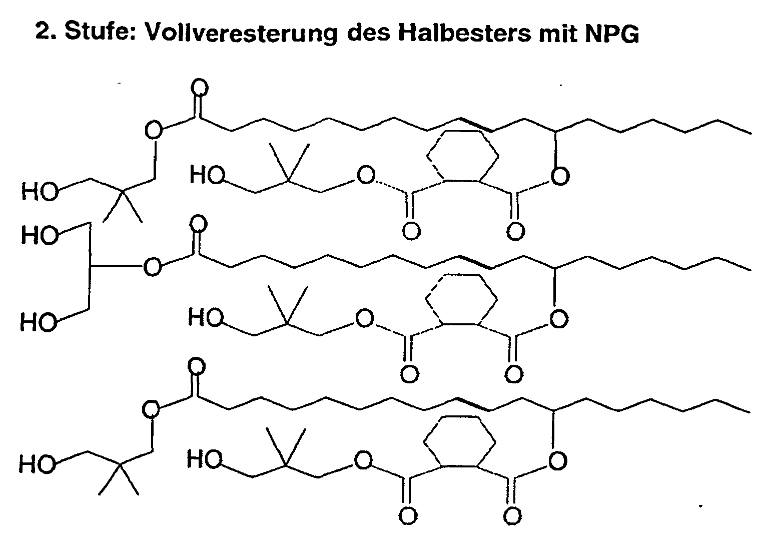

### Beispiele

### 1. Beispiel:

940 g Ricinusöl der Qualität "erste Pressung", Wassergehalt von max. 0,25%, werden in einen Laborreaktor mit Rührer und Destillatauslauf vorgelegt. Dazu werden unter Rühren 420g Hexahydrophthalsäureanhydrid zugegeben, das zuvor im Wärmeschrank bei 40°C - 60°C verflüssigt wurde. Danach werden 4 g Zinkacetat als Veresterungskatalysator zugegeben und die Mischung innerhalb von 20 Minuten unter weiterem Rühren auf 180°C gebracht. Die Halbesterbildung zwischen Ricinusöl und Hexahydrophthalsäureanhydrid wird anschliessend bei 180°C über die Viskositätszunahme kontrolliert (Messungen mit Kegel-Platte Viskosimeter bei 23°C). Nach ca. 40 Minuten Reaktionszeit erreicht die Mischung eine Viskosität von 22'400 mPas.

Zu diesem Ansatz werden nun 320 g Neopentylglykol und 320 g Trimethylolpropan zugegeben und während ca. 1 1/2h bei 245°C bis 250°C nachverestert. Während der Reaktion werden ca. 70 ml Kondensat destillativ entfernt. Nach dem Abkühlen und Abfüllen des Ansatzes wird ein Polyesterpolyol mit den folgenden Spezifikationen erhalten:

| | |
|---|---|
| Aspekt: | Gelblich klare, viskose Flüssigkeit |
| KOH-Wert: | 295 |
| Hydroxylequivalent: | 190 g/aeq. |
| Wassergehalt: | 0,1 % |
| Viskosität (23°C): | 10'600 mPas |

### Beispiel 2:

920 g Ricinusöl der Qualität "erste Pressung" und mit einem Wassergehalt von max. 0,25%, werden in einen Laborreaktor mit Rührer und Destillatauslauf vorgelegt. Dazu werden unter Rühren 320 g Bernsteinsäureäureanhydrid (BSA) Pulver zugegeben. Danach werden 4 g Veresterungskatalysator (Antimontrioxyd) zugegeben und die Mischung zur Halbestersynthese langsam (zur Vermeidung starker Sublimation von BSA im Reaktor) unter weiterem Rühren auf 170°C gebracht. Zum obigen Ansatz werden 720 g Neopentylglykol (NPG) zugegeben und während Ca. 2h bei 240°C nachverestert. Während der Nachveresterung werden ca. 80 ml Destillat mit einem hohen Anteil an Neopentylglykol aufgefangen. Nach dem Abkühlen und Abfüllen des Ansatzes wird ein Polyesterpolyol mit den folgenden Spezifikationen erhalten:

| | |
|---|---|
| Aspekt: | Gelblich klare viskose Flüssigkeit |
| KOH-Wert: | 261 |
| Hydroxylequivalent: | 215 g/aeq. |
| Wassergehalt: | <0,1 % |
| Viskosität 23°C: | 1'500 mPas |

### Beispiel 3:

Mit 960 g Ricinusöl, 440 g verflüssigtem Hexahydrophthalsäureanhydrid und 4 g Veresterungskatalysator wird wie in Beispiel 1 zunächst die Halbestersynthese durchgeführt. Anschliessend werden 480 g Neopentylglykol (NPG) und 120 g grobkörniges Pentaerythrit zugegeben und während ca. 1 1/2h bei 245°C bis 250°C nachverestert. Während NPG sofort in Lösung ging, bleibt Pentaerythrit bis ca. 220°C ungelöst. Zum Schluss wird im Ansatz keine Blasenbildung durch Kondensatabspaltung (Wasser) mehr erkennbar. Beim Abkühlen wird bei 210°C zur Trocknungsverbesserung, mittels Vakuum nochmals ca. 5 ml Destillat abgezogen, so dass insgesamt 76 ml Destillat aufgefangen werden. Nach dem Abkühlen und Abfüllen des Ansatzes wird ein Polyesterpolyol mit den folgenden Spezifikationen erhalten:

| | |
|---|---|
| Aspekt: | Gelblich viskose Flüssigkeit mit schwacher Trübung |
| KOH-Wert: | 261 |
| Hydroxylequivalent: | 215 g/aeq. |
| Wassergehalt: | <0,1 % |
| Viskosität 23°C: | 10'000 mPas |

### Beispiel 4:

Mit 1000 g Ricinusöl, 440 g verflüssigtem Hexahydrophthalsäureanhydrid und 4 g Veresterungskatalysator wird wie in den Beispielen 1 und 3 zunächst die Halbestersynthese durchgeführt. Anschliessend werden 280 g Neopentylglykol (NPG) und 280 g grobkörniges Pentaerythrit zugegeben und während ca. 1 1/2h bei 245°C bis 250°C nachverestert. Während NPG sofort in Lösung geht, bleibt Pentaerythrit bis ca. 220°C ungelöst. Zum Schluss ist im Ansatz keine Blasenbildung durch Kondensatabspaltung (Wasser) mehr erkennbar. Beim Abkühlen wird bei 210°C zur Trocknungsverbesserung, mittels Vakuum nochmals ca. 7 ml Destillat abgezogen, so dass insgesamt 70 ml Destillat aufgefangen werden. Nach dem Abkühlen und Abfüllen des Ansatzes wurde ein Polyesterpolyol mit den folgenden Spezifikationen erhalten:

| | |
|---|---|
| Aspekt: | Gelblich viskose Flüssigkeit mit mittlerer Trübung |
| KOH -Wert: | 280 |
| Hydroxylequivalent: | 200 g/aeq |
| Wassergehalt: | <0,1 % |
| Viskosität 23°C: | 34'000 mPas |

### Beispiel 5:

840 g Ricinolsäure der Qualität Edenor RI 90 von Henkel (Hydroxylzahl 159, Säurezahl 180) werden im Reaktor vorgelegt. Dazu werden unter Rühren 440 g Hexahydrophthalsäureanhydrid zugegeben, das zuvor im Wärmeschrank bei 40°C - 60°C verflüssigt wurde. Danach werden 4 g Veresterungskatalysator (Zinkoxyd) zugegeben und die Mischung innerhalb von 20 Minuten unter weiterem Rühren auf 180°C gebracht. Zum obigen Ansatz werden 340 g Neopentylglykol (NPG) und 400 g Trimethylolpropan zugegeben und während ca. 1 1/2h bei 245°C bis 250°C nachverestert. Zum Schluss ist im Ansatz keine Blasenbildung durch Kondensatabspaltung (Wasser) mehr erkennbar. Insgesamt werden während der Nachveresterung ca. 120 ml Kondensat erhalten.

Nach dem Abkühlen und Abfüllen des Ansatzes wird ein Polyesterpolyol mit den folgenden Spezifikationen erhalten:

| | |
|---|---|
| Aspekt: | Gelblich klare viskose Flüssigkeit |
| KOH-Wert: | 274 |
| Hydroxylequivalent: | 205 g/aeq. |
| Wassergehalt: | 0, 1 % |
| Viskosität 23°C: | 12'000 mPas |

## Patentansprüche

1. Polyesterpolyole, **dadurch gekennzeichnet, dass** sie Verbindungen der Formel (I) 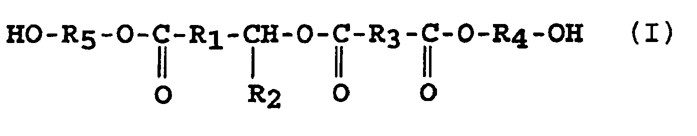
in der
R₁ für einen Alkylen- oder Alkenylenrest steht, insbesonders einen Rest mit 5 bis 20 C-Atomen, speziell bevorzugt den Rest -(CH₂)₇-CH=CH-CH₂-,
R₂ Wasserstoff oder insbesondere einen Alkyl-oder Alkenylrest mit vorzugsweise 2 bis 20 C-Atomen bedeutet, speziell bevorzugt den Rest -(CH₂)₅-CH₃,
R₃ einen aliphatischen, insbesondere einen cyclischen aliphatischen, oder aromatischen Rest bedeutet,
R₄ einen geradkettigen oder verzweigtkettigen Alkylenrest bedeutet, insbesondere Neopentylen, und
R₅ = R₄ ist oder einen gegebenenfalls mit Hydroxylgruppen substituierten sich von R₄ unterscheidenden, geradkettigen oder verzweigtkettigen Alkylenrest, bedeutet, insbesondere einen Neopentylenrest oder einen Hydroxymethyl substituierten Ethylenrest,
oder Mischungen von Verbindungen der Formel (I) enthalten oder daraus bestehen.

2. Polyesterpolyole gemäss Anspruch 1, **dadurch gekennzeichnet, dass** sie herstellbar sind durch Halbesterbildung zwischen mindestens einem Dicarbonsäureanhydrid, insbesondere einem cyclischen Dicarbonsäureanhydrid, und einer mindestens eine sekundäre Hydroxylgruppe tragenden, gesättigten oder ungesättigten Fettsäure oder einem entsprechenden Fettsäureester oder einer Mischung derselben und Nachveresterung durch mindestens ein Polyol.

3. Polyesterpolyole gemäss Anspruch 2, **dadurch gekennzeichnet, dass** der Fettsäureester Ricinusöl ist und die Fettsäure Ricinolsäure.

4. Polyesterpolyole gemäss Anspruch 2 oder 3, **dadurch gekennzeichnet, dass** das Mischungsverhältnis zwischen Anhydrid und Ricinusöl-Hydroxylequivalent 0,5 : 1 bis 2 : 1 beträgt.

5. Polyesterpolyole gemäss einem der Ansprüche 2 bis 4, **dadurch gekennzeichnet, dass** der mindestens eine Dicarbonsäureanhydrid ein cyclischer 1,2-Dicarbonsäureanhydrid ist, insbesondere Hexahydrophthalsäureanhydrid pur oder in Abmischungen mit Tetrahydrophthalsäureanhydrid.

6. Polyesterpolyole gemäss einem der Ansprüche 2 bis 5, **dadurch gekennzeichnet, dass** das Polyol für die Nachveresterung ein Polyol mit ausschliesslich primären Hydroxylgruppen ist, insbesondere Neopentylglycol.

7. Polyesterpolyole gemäss einem der Ansprüche 2 bis 6, **dadurch gekennzeichnet, dass** sie ein Hydroxylequivalent von 150 - 250 haben.

8. Polyesterpolyole gemäss einem der Ansprüche 2 bis 7, **dadurch gekennzeichnet, dass** sie durch Umsetzung der mindestens einen Fettsäure oder des mindestens einen Fettsäureesters mit dem mindestens einem Anhydrid einer Dicarbonsäure bei 150°C bis 200°C in Gegenwart eines Veresterungskatalysators und Nachveresterung mit der mindestens einen Polyhydroxylverbindung bei 230°C bis 250°C erhältlich sind.

9. Verwendung der Polyesterpolyole gemäss einem der Ansprüche 1 bis 8 als Komponente oder-Bestandteil einer Komponente in zweikomponentigen Polyurethanbeschichtungen und Polyurethanklebstoffen.

10. Verwendung der Polyesterpolyole gemäss einem der Ansprüche 1 bis 8 in lichtechten, zweikomponentigen Polyurethan-Beschichtungen mit Hexamethylendiisocyanat (HDI)-Cyclotrimerisat als Härter.

11. Zweikomponentige Polyurethanbeschichtung oder zweikomponentiger Polyurethanklebstoff, **dadurch gekennzeichnet, dass** die Härterkomponente Polyesterpolyole gemäss einem der Ansprüche 1 bis 8 enthält oder daraus besteht und dass die Härterkomponente einen Härter auf Isocyanatbasis, insbesondere Hexamethylendiisocyanat (HDI)-Cyclotrimerisat enthält oder daraus besteht.

12. Verfahren zur Herstellung von Polyesterpolyolen gemäss einem der Ansprüche 1 bis 8, **dadurch gekennzeichnet, dass** mindestens eine gesättigte oder ungesättigte Fettsäure und/oder mindestens ein Ester einer gesättigten oder ungesättigten Fettsäure, wobei die Fettsäure mindestens eine, insbesonders eine sterisch gehinderte, sekundäre Hydroxylgruppe enthält, mit mindestens einem Anhydrid einer cyclischen Dicarbonsäure, insbesondere einer Dicarbonsäure, unter Bildung eines Halbesters umgesetzt und der gebildete Halbester mit Polyhydroxylverbindungen, insbesondere Glycolen, nachverestert wird.

13. Verfahren gemäss Anspruch 12, **dadurch gekennzeichnet, dass** die Fettsäure Ricinolsäure und der Fettsäureester Ricinusöl sind.

14. Verfahren gemäss Anspruch 12 oder 13, **dadurch gekennzeichnet, dass** der Anhydrid einer Dicarbonsäure der Anhydrid einer 1,2-Dicarbonsäure, insbesondere Hexahydrophthalsäureanhydrid pur oder in Abmischungen mit Tetrahydrophthalsäureanhydrid ist.

15. Verfahren gemäss einem der Ansprüche 12 bis 14, **dadurch gekennzeichnet, dass** während der Nachveresterung gebildetes Kondensatwasser durch ein Schleppmittel, insbesondere Neopentylglykol (NPG) entfernt wird.

## Claims

1. Polyester polyols **characterized in that** they comprise compounds of formula (I) 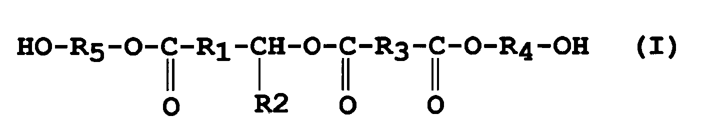
wherein
R₁ represents an alkylene group or an alkenylene group, in particular a group with 5 to 20 C-atoms, especially preferred the group -(CH₂)₇-CH=CH-CH₂-,
R₂ represents hydrogen or in particular an alkyl group or an alkenyl group with preferably 2 to 20 C-atoms, particularly preferred the group -(CH₂)₅-CH₃,
R₃ represents an aliphatic, in particular a cyclic aliphatic, or aromatic group,
R₄ represents a linear or branched alkylene group, in particular neopentylene and
R₅=R₄, or R₅ represents an optionally hydroxyl group substituted linear or branched alkylene group that differs from R₄, in particular a neopentylene group or a hydroxymethyl substituted ethylene group,
or mixtures of compounds of formula (I) or consist thereof.

2. The polyester polyols according to Claim 1 **characterized in that** they are producible by half ester formation between one dicarboxylic anhydride, in particular a cyclic dicarboxylic anhydride, and a saturated or unsaturated fatty acid carrying at least one secondary hydroxyl group, or an ester of a respective fatty acid, or a mixture thereof, and final esterification by at least one polyol.

3. The polyester polyols according to Claim 2 **characterized in that** the ester of a fatty acid is castor oil and the fatty acid is ricinoleic acid.

4. The polyester polyols according to Claim 2 or 3 **characterized in that** the mixing ratio between anhydride and hydroxy-equivalent of castor oil is 0.5 : 1 to 2 : 1.

5. The polyester polyols according to anyone of the preceding Claims **characterized in that** the at least one dicarboxylic anhydride is a cyclic 1,2-dicarboxylic anhydride, in particular hexahydrophthalic anhydride in pure form or mixed with tetrahydrophthalic anhydride and/or succinic anhydride.

6. The polyester polyols according to anyone of the preceding Claims **characterized in that** the polyol for the final esterification is a polyol with exclusively primary hydroxyl groups, in particular neoperitylglycol.

7. The polyester polyols according to anyone of the preceding Claims **characterized in that** their hydroxyl equivalent is from 150 to 250.

8. The polyester polyols according to anyone of the Claims 2 - 7 **characterized in that** said polyols are obtainable by the reaction of the at least one fatty acid or the at least one ester of a fatty acid with the at least one anhydride of a dicarboxylic acid at temperatures of 150°C to 200°C in the presence of an esterification catalyst and final esterification with the at least one polyhydroxyl compound at 230°C to 250°C.

9. A use of polyester polyols according to anyone of the Claims 1- 8 as component or a constituent of a component of a two component polyurethane coating or polyurethane adhesive.

10. A use of polyester polyols according to anyone of the Claims 1 - 8 in lightfast two component polyurethane coatings with hexamethylene-diisocyanate(HDI) - cyclotrimerisate as curing agent.

11. A two component polyurethane coating or two component polyurethane adhesive wherein the curing component comprises or consists of polyester polyols according to anyone of the Claims 1 - 8 and wherein the curing component comprises or consists of a curing agent on isocyanate basis, in particular hexamethylene-diisocyanate(HDI)-cyclotrimerisate.

12. A method for the production of polyester polyols according to anyone of the Claims 1 - 8 **characterized in that** at least one saturated or unsaturated fatty acid and/or at least one ester of a saturated or unsaturated fatty acid is reacted with at least one anhydride of a cyclic dicarboxylic acid, in particular of a dicarboxylic acid, under formation of a half ester, wherein the fatty acid contains at least one, in particular one stericly hindered, secondary hydroxyl group, and wherein the formed half ester is finally esterified with at least one polyhydroxyl compound, in particular glycols.

13. The method of Claim 12 wherein the fatty acid is ricinoleic acid and the ester of fatty acid is castor oil.

14. The method of Claim 12 or 13 wherein the at least one dicarboxylic anhydride is an anhydride of a 1,2-dicarboxylic acid, in particular hexahydrophthalic anhydride in pure form or mixed with tetrahydrophthalic anhydride, and/or succinic anhydride.

15. The method according to anyone of the Claims 12 - 14 **characterized in that** the water formed during final esterification is removed by an entrainer, in particular neopentylglycol(NPG).

## Revendications

1. Polyesters polyols, **caractérisés en ce qu'**ils contiennent ou sont constitués de composés de la formule (I) 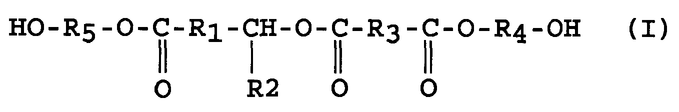
dans laquelle
R₁ représente un radical alkylène ou alcényle, en particulier un radical comportant de 5 à 20 atomes de C, de manière spécialement préférée le radical -(CH₂)₇-CH=CH-CH₂-,
R₂ représente de l'hydrogène ou en particulier un radical alkyle ou alcényle comportant de préférence de 2 à 20 atomes de C, de manière particulièrement préférée le radical - (CH₂)₅-CH₃,
R₃ représente un radical aliphatique, en particulier un radical aliphatique cyclique, ou un radical aromatique,
R₄ représente un radical alkylène à chaîne linéaire ou à chaîne ramifiée, en particulier du néopentylène, et
R₅ = R₄ ou représente un radical alkylène à chaîne linéaire ou à chaîne ramifiée différent de R₄, le cas échéant substitué par des groupes hydroxyle, en particulier un radical néopentylène ou un radical éthylène substitué par de l'hydroxyméthyle,
ou de mélanges de composés de la formule (I).

2. Polyesters polyols selon la revendication 1, **caractérisés en ce qu'**ils peuvent être préparés par formation de semi-esters entre au moins un anhydride d'acide dicarboxylique, en particulier un anhydride d'acide dicarboxylique cyclique, et un acide gras saturé ou insaturé portant au moins un groupe hydroxyle secondaire ou un ester d'acide gras correspondant ou un mélange de ceux-ci, et estérification subséquente par au moins un polyol.

3. Polyesters polyols selon la revendication 2, **caractérisés en ce que** l'ester d'acide gras est de l'huile de ricin et l'acide gras est de l'acide ricinoléique.

4. Polyesters polyols selon la revendication 2 ou 3, **caractérisés en ce que** la proportion de mélange entre l'anhydride et l'équivalent hydroxyle de l'huile de ricin est de 0,5 : 1 à 2 : 1.

5. Polyesters polyols selon l'une quelconque des revendications 2 à 4, **caractérisés en ce que** ledit au moins un anhydride d'acide dicarboxylique est un anhydride d'acide 1,2-dicarboxylique cyclique, en particulier de l'anhydride d'acide hexahydrophtalique, pur ou en mélange avec de l'anhydride d'acide tétrahydrophtalique.

6. Polyesters polyols selon l'une quelconque des revendications 2 à 5, **caractérisés en ce que** le polyol utilisé pour l'estérification subséquente est un polyol ne comportant que des groupes hydroxyle primaires, en particulier du néopentylglycol.

7. Polyesters polyols selon l'une quelconque des revendications 2 à 6, **caractérisés en ce qu'**ils possèdent un équivalent hydroxyle de 150 à 250.

8. Polyesters polyols selon l'une quelconque des revendications 2 à 7, **caractérisés en ce qu'**ils peuvent être obtenus par réaction dudit au moins un acide gras ou dudit au moins un ester d'acide gras avec ledit au moins un anhydride d'un acide dicarboxylique, à une température de 150°C à 200°C et en présence d'un catalyseur d'estérification, et estérification subséquente avec ledit au moins un composé polyhydroxylé, à une température de 230°C à 250°C.

9. Utilisation des polyesters polyols selon l'une quelconque des revendications 1 à 8 en tant que composants ou constituants d'un composant dans des revêtements de polyuréthane ou d'adhésifs à base de polyuréthane à deux composants.

10. Utilisation des polyesters polyols selon l'une quelconque des revendications 1 à 8 dans des revêtements de polyuréthane à deux composants solides à la lumière avec un trimère cyclique de diisocyanate d'hexaméthylène (HDI) en tant que durcisseurs.

11. Revêtement de polyuréthane à deux composants ou adhésif à base de polyuréthane à deux composants, **caractérisé en ce que** le composant durcisseur contient ou consiste en polyesters polyols selon l'une quelconque des revendications 1 à 8 et **en ce que** le composant durcisseur contient ou consiste en un durcisseur à base d'isocyanate, en particulier un trimère cyclique de diisocyanate d'hexaméthylène (HDI).

12. Procédé de préparation de polyester polyols selon l'une quelconque des revendications 1 à 8, **caractérisé en ce que** l'on fait réagir au moins un acide gras saturé ou insaturé et/ou au moins un ester d'un acide gras saturé ou insaturé, où l'acide gras contient au moins un, en particulier un groupe hydroxyle secondaire à encombrement stérique, avec au moins un anhydride d'un acide dicarboxylique cyclique, en particulier d'un acide dicarboxylique, avec formation d'un semi-ester, le semi-ester étant post-estérifié avec des composés polyhydroxylés, en particulier des glycols.

13. Procédé selon la revendication 12, **caractérisé en ce que** l'acide gras est de l'acide ricinoléique et l'ester d'acide gras est de l'huile de ricin.

14. Procédé selon la revendication 12 ou 13, **caractérisé en ce que** l'anhydride d'un acide dicarboxylique est l'anhydride d'un acide 1,2-dicarboxylique, en particulier de l'anhydride d'acide hexahydrophtalique pur ou en mélanges avec de l'anhydride d'acide tétrahydrophtalique.

15. Procédé selon l'une quelconque des revendications 12 à 14, **caractérisé en ce que** l'eau de condensation formée pendant la post-estérification est éliminée par un agent d'entraînement, en particulier du néopentylglycol (NPG).
